# EUROPÄISCHE PATENTSCHRIFT

(11) **EP 2 257 956 B1**
(45) Veröffentlichungstag und Bekanntmachung des Hinweises auf die Patenterteilung: **06.07.2011**
(21) Anmeldenummer: 09725825.5
(22) Anmeldetag: 25.03.2009
(51) Int. Cl.: H01H 3/16, B66F 3/00, F16H 25/20

(54) **SCHALTER, INSBESONDERE ENDSCHALTER**
SWITCH, IN PARTICULAR LIMIT SWITCH
RUPTEUR, EN PARTICULIER RUPTEUR DE FIN DE COURSE

(30) Priorität: 27.03.2008 AT 4812008
(43) Veröffentlichungstag der Anmeldung: 08.12.2010
(73) Patentinhaber: Zimmermann, Jürgen, 6900 Bregenz (AT)
(72) Erfinder: RANGGER, Peter, A-6850 Dornbirn (AT)
(74) Vertreter: Hofmann, Ralf U.
(86) Internationale Anmeldenummer: PCT/AT2009/000119
(87) Internationale Veröffentlichungsnummer: WO 2009/117752

(56) Entgegenhaltungen:
- EP-A- 1 473 268
- EP-A- 1 870 914

## Beschreibung

Die vorliegende Erfindung betrifft einen Schalter, insbesondere Endschalter, mit zumindest einem Schaltteil, welches zumindest einen entlang einer Schahstößelführungsbahn, insbesondere linear, verschiebbaren Schaltstößel zum Schalten mindestens eines Schaltkontakts aufweist, und mit zumindest einem Betätigungsteil zum Verschieben des Schaltstößels entlang der Schaltstößelführungsbahn. Darüber hinaus betrifft die Erfindung ein Spindelhubgetriebe mit zumindest einem solchen Schalter.

Derartige Schalter werden beispielsweise als Endschalter bei Spindelhubgetrieben eingesetzt, welche zum Positionieren einer Last dienen. Durch die Endschalter wird die Bewegung des Spindelhubgetriebes an vorgesehenen Endpositionen gestoppt. Hierzu ist ein Auslöseteil an demjenigen Ende der Spindel angebracht, welches dem Betätigungsende der Spindel gegenüberliegt. Dieses Auslöseteil verstellt sich zusammen mit der Spindel in deren achsiale Richtung. Die Bewegungsrichtung des Auslöseteils liegt in der Regel senkrecht zur Längsachse eines meist axial entlang der Schaltstößelführungsbahn verschiebbaren Schaltstößels des Schalters, von welchem mindestens ein Schaltkontakt des Schalters geschaltet wird. Da der Schaltstößel selbst nicht durch eine senkrecht zu seiner Längsachse wirkende Kraft belastet werden darf, weist der Schalter weiters ein Betätigungsteil mit einem Betätigungsstößel auf, an welchem z. B. eine Rolle drehbar gelagert sein kann. Die Rolle des Betätigungsstößels wirkt mit einer Schrägfläche des Auslöseteils zusammen, durch welche der Betätigungsstößel in axialer Richtung verschoben wird und hierbei den Schaltstößel des Endschalters verschiebt. EP 1 870 914 A offenbart einen Endschalter gemäβ dem Oberbegriff des Anspruchs 1.

Nachteilig bei solchen herkömmlichen Schaltern ist es, dass die Positionierung des Auslöseteils gegenüber dem Schalter nur relativ geringe Toleranzen aufweisen darf, um einen zuverlässigen Schaltvorgang zu erreichen. Dies gilt insbesondere bei Schaltteilen mit mehreren Schaltkontaktpunkten. Häufig werden Schalter eingesetzt, bei denen nach einem vorgegebenen Verschiebeweg des Schaltstößels ein erster Schaltpunkt erreicht wird (der sogenannte "Sprungkontakt") und nach einem weiteren Verschiebeweg ein zweiter Schaltpunkt erreicht wird (die sogenannte "Zwangsöffnung"). Der zweite Schaltpunkt muss zuverlässig erreicht werden, wobei der Schaltstößel nur geringfügig über diesen zweiten Schaltpunkt hinaus verschoben werden darf, um das Schaltteil nicht zu beschädigen.

Aufgabe der Erfindung ist es, einen Schalter der eingangs genannten Art bereitzustellen, bei dem die Gefahr einer Beschädigung oder Zerstörung des Schaltteils vermieden oder zumindest herabgesetzt ist.

Dies wird erfindungsgemäß erreicht, indem das Betätigungsteil zumindest einen, vorzugsweise linear, verschiebbar an oder in einer Betätigungsstößelführungsbahn gelagerten Betätigungsstößel und zumindest ein, vorzugsweise linear, verschiebbar an oder in einer Übertragungsteilführungsbahn gelagertes Übertragungsteil zum Verschieben des Schaltstößels aufweist, wobei die Betätigungsstößelführungsbahn und die Übertragungsteilführungsbahn schräg oder orthogonal zueinander angeordnet sind und das Übertragungsteil in oder an der Übertragungsteilführungsbahn mittels zumindest einer, zumindest abschnittsweise schräg zur Betätigungsstößelführungsbahn angeordneten Steuerfläche vom Betätigungsstößel in Richtung hin zum Schaltstößel verschiebbar ist.

Das Betätigungsteil weist somit eine Betätigungsstößelführungsbahn und eine Übertragungsteilführungsbahn auf. In oder an der Betätigungsstößelführungsbahn ist der Betätigungsstößel verschiebbar gelagert. In oder an der Übertragungsteilführungsbahn ist das Übertragungsteil verschiebbar gelagert. Günstigerweise sind die Betätigungsstößelführungsbahnen und die Übertragungsteilführungsbahnen jeweils linear, also gerade ausgeführt, so dass sowohl der Betätigungsstößel als auch das Übertragungsteil jeweils einen linearen Hub ausführen. Dies muss aber nicht zwingend so sein, es ist auch möglich, gekrümmte Übertragungsteilführungsbahnen und/oder gekrümmte Betätigungsstößelführungsbahnen vorzusehen. Wichtig ist dabei jedenfalls, dass die Übertragungsteilführungsbahn und die Betätigungsstößelführungsbahn schräg oder orthogonal zueinander, vorzugsweise aufeinandertreffend, angeordnet sind. Der Begriff schräg bezeichnet im Zusammenhang mit der Erfindung jeden Verlauf, der nicht orthogonal und nicht parallel ist Schräg sind somit alle Winkel die nicht 0° und nicht ein ganzzahliges Vielfaches von 90° sind. Parallel bedeutet in diesem Zusammenhang, dass der Abstand konstant bleibt, wobei der Abstand null oder endlich groß oder sogar verstellbar sein kann. Es kann sich also um parallele Geraden oder Ebenen oder um gekrümmt verlaufende Linien oder Flächen handeln, die zueinander aber mit konstantem Abstand und somit parallel verlaufen. Günstigerweise liegt der Winkel zwischen Betätigungsstößelführungsbahn und Übertragungsteilführungsbahn, vorzugsweise in dem Punkt bzw. Bereich, in dem sie aufeinandertreffen, in einem Winkelbereich von 45° bis 90°. Besonders bevorzugt ist es, wenn die Betätigungsstößelführungsbähn und die Übertragungsteilführungsbahn orthogonal aufeinander treffen. Die erfindungsgemäße, zumindest abschnittsweise schräge Steuerfläche hat den Vorteil, dass durch ihre Formgebung sehr exakt vorgegeben werden kann, in welchem Bereich des Hubes des Betätigungsstößels und wie weit das Übertragungsteil in Richtung Schaltstößel verschoben wird. Dadurch kann verhindert werden, dass der Schaltstößel zu weit in das Schaltteil hineingeschoben wird, womit wiederum eine Beschädigung oder Zerstörung des Schaltteils vermieden ist.

Das Auslöseteil, welches auf den Betätigungsstößel trifft und diesen entlang der Betätigungsstößelführungsbahn verschiebt, kann Teil des Schalters oder ein nicht zum Schalter gehörendes, also schalterfremdes Bauteil sein. Im Fall eines Spindelhubgetriebes kann es sich zum Beispiel um ein fix an einer, vorzugsweise an einem Ende einer, Spindel angeordnetes Auslöseteil handeln. Die erfindungsgemäßen Schalter können als Endschalter eingesetzt werden, um eine Bewegung des Auslöseteils zu stoppen oder umzukehren. Sie können aber auch als sonstige Sensoren verwendet werden, z.B. um anzuzeigen, dass das Auslöseteil sie passiert bzw. überfährt hat.

Bevorzugte Ausführungsvarianten der Erfindung sehen vor, dass die Steuerfläche einen ersten Steuerflächenabschnitt und zumindest einen zweiten Steuerflächenabschnitt aufweist, wobei der erste Steuerflächenabschnitt zum Verschieben des Übertragungsteiles in Richtung hin zum Schaltstößel schräg zur Betätigungsstößelführungsbahn angeordnet ist und der zweite Steuerflächenabschnitt im Wesentlichen parallel zur Betätigungsstößelführungsbahn angeordnet ist. Im Wesentlichen parallel bezeichnet dabei Winkel von 0° plus/minus 20°, vorzugsweise plus/minus 10°. Man spricht in diesem Sinne also noch von im Wesentlichen parallel, wenn eine Abweichung von maximal 20°, vorzugsweise von maximal 10°, von der Parallelität vorliegt. In dieser Ausgestaltungsform verschiebt der Betätigungsstößel das Übertragungsteil während eines ersten Teilhubes mittels des ersten Steuerflächenabschnitts entlang der Übertragungsteilführungsbahn in Richtung hin zum Schaltstößel des Schaltteils, womit der Schaltstößel betätigt werden kann. Auf einem zweiten Teilhub des Bestätigungsstößels kommt der zweite Steuerflächenabschnitt zur Wirkung. In diesem zweiten Teilhub erfolgt keine oder nur eine tolerier- bzw. vorgebbar geringe Verschiebung des Übertragungsteils mittels der Steuerfläche, während sich der Betätigungsstößel weiter entlang der Betätigungsstößelführungsbahn bewegt. Das Übertragungsteil verharrt somit günstigerweise während des zweiten Teilhubes des Betätigungsstößels in seiner Position in oder an der Übertragungsteitführungsbahn oder bewegt sich nur geringfügig innerhalb tolerierbarer Grenzen. Dies hat zur Folge, dass auch der Schaltstößel während des zweiten Teilhubes des Betätigungsstößels nicht oder nur in tolerierbaren Grenzen weiter betätigt oder verschoben wird, so dass keine Gefahr der Beschädigung des Schaltteils besteht. Durch den zweiten Teilhub bzw. die entsprechende Ausformung der Steuerfläche sind Toleranzen für den Einbau und Betrieb des Schalters geschaffen, welche den Einbau des Schalters erleichtern und auch eine Betriebssichereit trotz Bauteillängenänderungen z.B. durch Abnutzung bereit stellen, ohne dabei eine Zerstörung des Schaltteils zu riskieren.

Die Steuerfläche kann natürlich auch durch eine oder mehrere entsprechend platzierte und ausgeformte Steuerkante(n) ersetzt werden, ohne den Schutzumfang der Erfindung zu verlassen. Besonders bevorzugte Ausführungsbeispiele sehen vor, dass die Steuerfläche am Betätigungsstößel vorzugsweise einstückig fixiert ist, also vorzugsweise ein Teil des Betätigungsstößels ist. Dies muss aber nicht zwingend so sein, die Steuerfläche kann auch am Übertragungsteil, vorzugsweise einstückig fixiert sein oder zwischen Übertragungsteil und Betätigungsstößel wirken, ohne mit einem der beiden Bauteile fix verbunden zu sein.

Wenn die Steuerfläche ein Teil des Betätigungsstößels ist, ist es günstig vorzusehen, dass der Betätigungsstößel eine Aufnahmeausnehmung für das Übertragungsteil aufweist und die Steuerfläche zumindest bereichsweise, vorzugsweise im Bereich des ersten Steuerflächenabschnitts, einen Teil einer die Aufnahmeausnehmung begrenzenden Wand des Betätigungsstößels bildet. Das Übertragungsteil kann dann während des ersten Teilhubes zumindest teilweise in die Aufnahmeausnehmung versenkt oder versenkbar sein.

Die Schaltstößelführungsbahn und die Übertragungsteilführungsbahn sind der Einfachheit halber günstigerweise parallel oder sogar koaxial zueinander angeordnet. Dies muss aber nicht zwingend so sein. Um die Übertragung der Bewegung des Betätigungsstößels über das Übertragungsteil auf den Schaltstößel dauerhaft ohne Verkanten der Bauteile sicher zu stellen, ist es günstig, wenn das Übertragungsteil zumindest bereichsweise eine gerundete Außenkontur aufweist. Besonders bevorzugte Ausführungsbeispiele sehen vor, dass das Übertragungsteil eine Kugel oder Walze aufweist oder ist. Bei der Schaltstößelführungsbahn und/oder der Betätigungsführungsstößelbahn und/oder der Übertragungsteilführungsbahn handelt es sich günstigerweise um Zwangsführungen, die besonders bevorzugt kanalartig, insbesondere radial umfangsgeschlossen ausgebildet sind. Es kann sich z. B. um Bohrungen in einem Betätigungsteilgehäuse des Betätigungsteils und/oder einem Schaltteilgehäuse des Schaltteils handeln. Günstigerweise sind die Betätigungsstößelführungsbahn und die Übertragungsteilführungsbahn zumindest teilweise in oder an einem gemeinsamen Betätigungsteilgehäuse angeordnet. Für den Rückhub des Betätigungsstößels entlang der Betätigungsstößelführungsbahn ist günstigerweise eine, auf den Betätigungsstößel wirkende Betätigungsstößelrückstellfeder vorgesehen. Diese ist bevorzugt in oder an der Betätigungsstößelführungsbahn angeordnet und wirkt bevorzugt in Richtung hin zur maximal aus der Betätigungsstößelführungsbahn ausgefahrenen Stellung des Betätigungsstößels.

Zur Rückstellung des Übertragungsteils und/oder des Schaltstößels ist günstigerweise zumindest eine Rückstellfeder vorgesehen, die vorzugsweise für eine gemeinsame Rückstellung des Übertragungsteils und des Schaltstößels sorgt. So kann z. B. für die Rückstellung des Übertragungsteils die in den kommerziell erhältlichen Schaltteilen bereits vorgesehene Rückstellfeder für den Schaltstößel auch für eine Rückstellung des Übertragungsteils sorgen. Natürlich ist es auch denkbar, für den Übertragungsteil eine eigene Rückstellung bzw. Rückstellfeder vorzusehen, falls dies in gewissen Ausführungsvarianten notwendig erscheint. Für eine Rückstellung ist es jedenfalls günstig, wenn die Rückstellfeder das Übertragungsteil in Richtung hin zum Betätigungsstößel beaufschlagt. Als Rückstellfeder bzw. Betätigungsstößelrückstellfeder kann jeder geeignete elastisch deformierbare Körper, wie z.B. eine Schraubenfeder, verwendet werden.

Weitere Einzelheiten und Merkmale eines bevorzugten Ausführungsbeispiels der Erfindung werden anhand der Figurenbeschreibung erläutert. Dabei zeigen:
- Fig. 1 bis 3: Außenansichten auf das Ausführungsbeispiel eines erfindungsgemäßen Schalters bzw. Endschalters,
- Fig. 4 und 5: Darstellungen zum Innenleben des Ausführungsbeispiels,
- Fig. 6a bis 6c: schematische Darstellungen zu einem, beim Stand der Technik bekannten Ausführungsbeispiel eines Schaltteils,
- Fig. 7: eine Explosionsdarstellung des Ausführungsbeispiels,
- Fig. 8a - 8d: Darstellungen zur Erläuterung der Funktion des Ausführungsbeispiels,
- Fig. 9: ein Spindelhubgetriebe mit zwei erfindungsgemäßen Endschaltern gem. des Ausführungsbeispiels und
- Fig. 10a - 10c: Darstellungen zur Justiermöglichkeit des Endschalters.

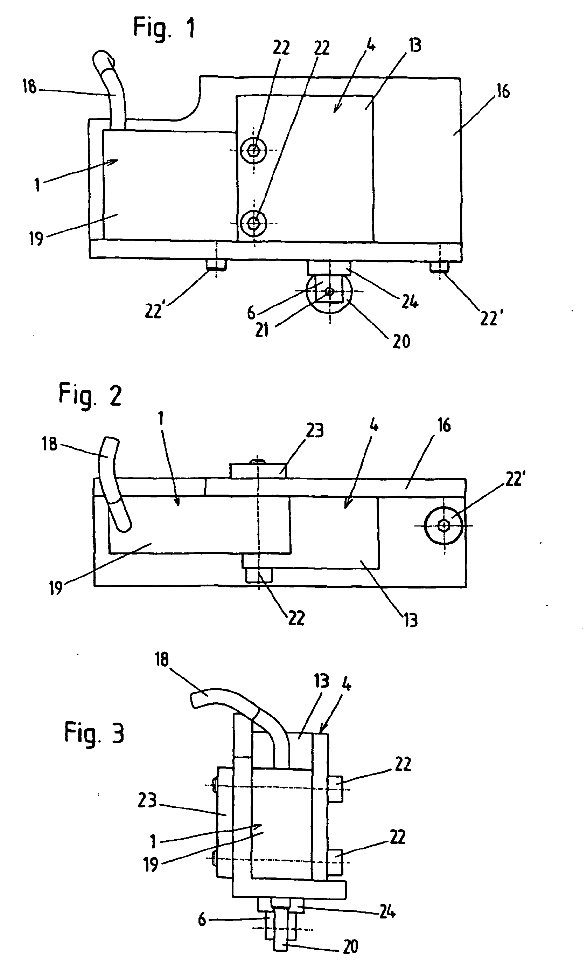

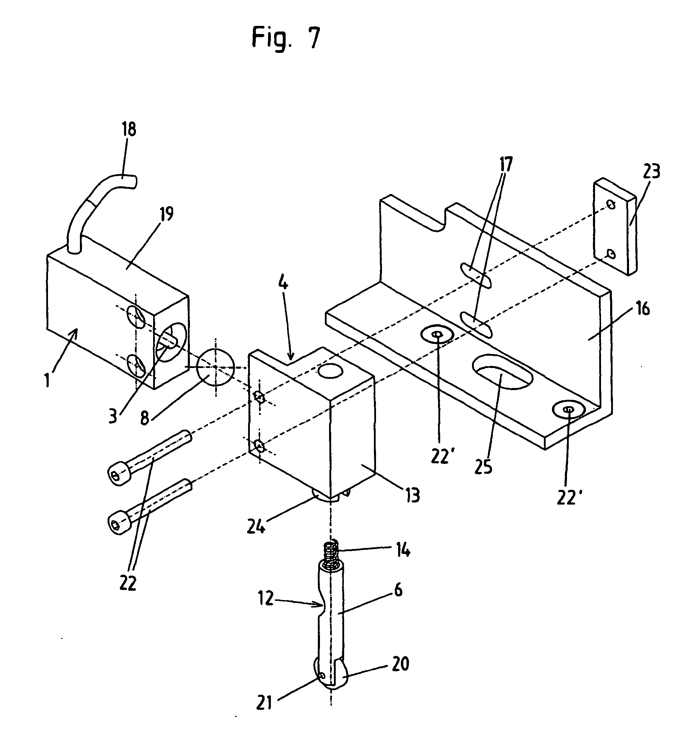

In den Außenansichten auf das erfindungsgemäße Ausführungsbeispiel gem. Fig. 1 bis 3 zeigt Fig. 1 eine Seitenansicht, Fig. 2 eine Draufsicht und Fig. 3 eine Rückansicht auf den erfindungsgemäß ausgebildeten Endschalter. Dieser weist ein an sich bekanntes und kommerziell erhältliches Schaltteil 1 mit einem Schaltteilgehäuse 19, sowie ein Betätigungsteil 4 mit Betätigungsteilgehäuse 13 auf. Im gezeigten Ausführungsbeispiel ist ein Montagekorpus 16 des Endschalters vorgesehen, auf dem das Betätigungsteil 4 und, wie hier gezeigt, vorzugsweise auch das Schaltteil 1 gehalten bzw. gelagert ist. Zur Verbindung des Schaltteils 1 mit dem Betätigungsteils 4 und dem Montagekorpus 16 sind im gezeigten Ausführungsbeispiel zwei Schrauben 22 vorgesehen, welche durch entsprechende Löcher im Schaltteilgehäuse 19 und Betätigungsteilgehäuse 13 hindurchgeführt und auf der Rückseite des Montagekorpus 16 in die Halteplatte 23 eingeschraubt sind. Dies ist natürlich nur ein Beispiel für eine von vielen möglichen Ausgestaltungsformen. Bevorzugt ist jedoch vorgesehen, dass, wie besonders gut in der Explosionsdarstellung gem. Fig. 7 zu sehen, Justierführungsbahnen 17 vorgesehen sind, mit denen der Abstand zwischen dem Schaltteil 1 und dem Betätigungsteil 4 justiert und vorzugsweise auch die Position des Betätigungsstößels 6 am Montagekorpus 16 justiert werden kann. Im gezeigten Ausführungsbeispiel handelt es sich bei den Justierführungsbahnen 17 um zwei Langlöcher im Montagekorpus 16, welche es erlauben, das Schaltteil 1 und den Betätigungsteil 4 relativ zueinander und zusätzlich auch relativ zum Montagekorpus 16 zu verschieben.

Dies ist natürlich nur eine bevorzugte Ausführungsform, es kann auch nur eine einzige Justierführungsbahn 17 für die genannten Einstellmöglichkeiten vorgesehen sein. Genauso gut ist es aber möglich, für jede Verstellung der einzelnen Bauteile eine einzelne oder mehrere Justierführungsbahnen 17 vorzusehen.

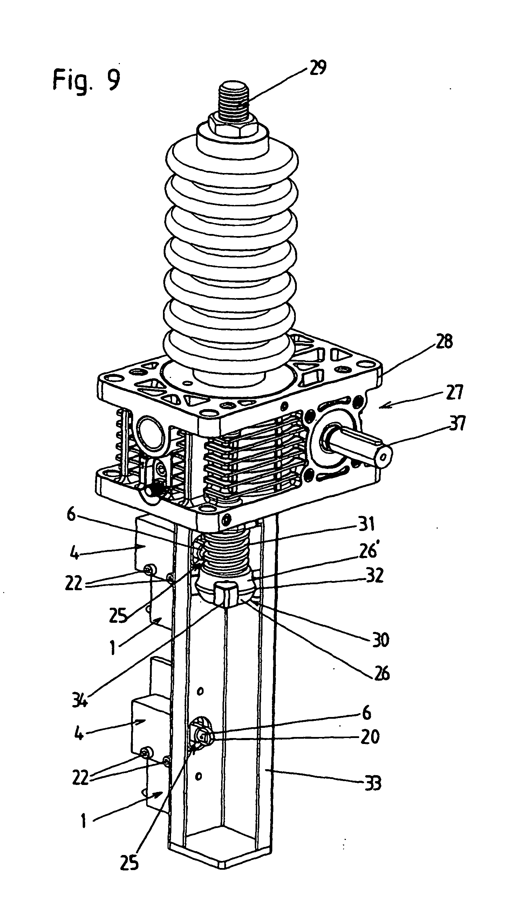

In dem im hier gezeigten Ausführungsbeispiel im Querschnitt L-förmig ausgebildeten Montagekorpus 16 sind zwei weitere Schrauben 22' vorgesehen, die dazu dienen, den Endschalter an einem Spindelhubgetriebe 27, wie dies beispielhaft in Fig. 9 gezeigt ist, oder einem anderen Bauteil zu befestigen. Natürlich sind auch alle anderen beim Stand der Technik bekannten Befestigungsformen wie Anschweißen, Verlöten und dgl. denkbar.

Das Signalkabel 18 dient dazu, das vom Schaltteil 1 generierte Schaltsignal weiter zu leiten.

Wie insbesondere in den Fig. 1 und 3 zu sehen, ist am aus dem Betätigungsteilgehäuse 13 herausragenden Ende des Betätigungsstößels 6 eine um die Rollenachse 21 drehbare Rolle 20 vorgesehen. Dies ist natürlich aber nur ein bevorzugtes Ausführungsbeispiel. Günstig ist es jedenfalls, wenn der Betätigungsstößel 6 an seinem, aus dem Betätigungsteilgehäuse 13 herausragenden Ende eine abgerundete Oberfläche bzw. Gleitfläche aufweist, wie dies insbesondere bei der weiter unten folgenden Beschreibung der Fig. 9 gezeigt ist. Das vordere Ende des Betätigungsstößels 6 ist im hier gezeigten Ausführungsbeispiel zusätzlich in einer Hülse 24 geführt, welche, wie insbesondere in Fig. 3 und Fig. 7 zu sehen, geschlitzt ausgebildet ist, damit die Rolle 20 und damit der Betätigungsstößel 6 möglichst weit in Richtung Betätigungsteilgehäuse 13 verschoben werden können.

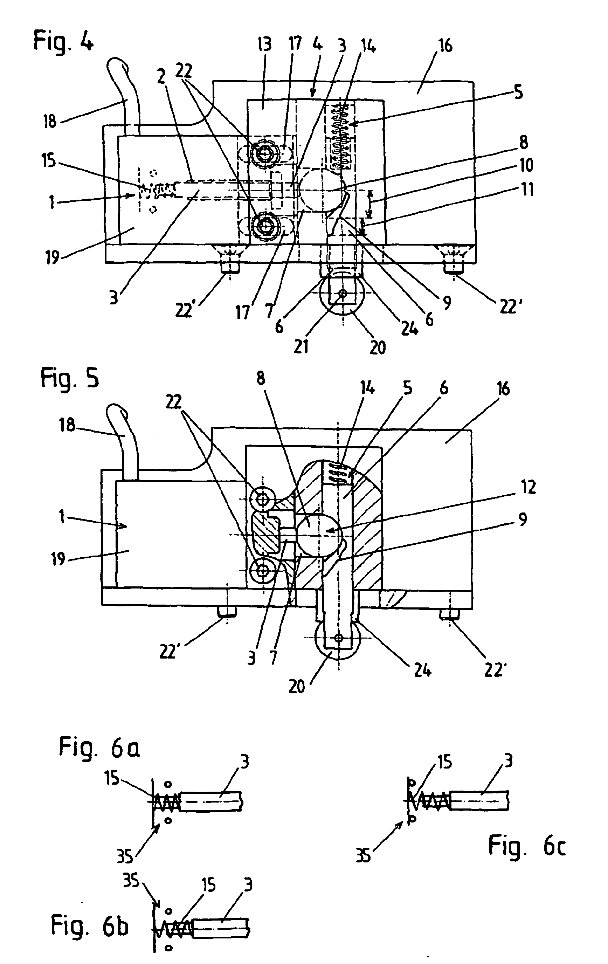

Fig. 4 zeigt nun eine Seitenansicht, in der für das Verständnis der Erfindung wesentliche Bauteile, welche sich im Inneren des Betätigungsteilgehäuses 13 und des Schaltteilgehäuses 19 dieses Ausführungsbeispieles befinden, gestrichelt dargestellt sind. Bei dem Schartteil 1 handelt es sich, wie gesagt, um ein kommerziell auf dem Markt erhältliches Bauteil, so dass man sich hier auf die Beschreibung der wesentlichen Bauteile beschränken kann. Wesentlich ist zunächst der Schaltstößel 3, welcher in der Schaltstößelführungsbahn 2 linear verschiebbar geführt ist. Im hier gezeigten Ausführungsbeispiel ist am vom Übertragungsteil 8 abgewandten Ende des Schaltstößels 3 die Rückstellfeder 15 angeordnet, welche unter anderem dazu dient, den hier nur schematisch dargestellten und gem. der Fig. 6a bis 6c noch einmal im Detail erläuterten Schaltkontakt 35 gemeinsam mit dem Schaltstößel 3 zu betätigen. Im gezeigten Ausführungsbeispiel wird die Rückstellfeder 15 darüber hinaus dazu verwendet, für eine Rückstellung des Schaltstößels 3 und des Übertragungsteils 8 in Richtung hin zum Betätigungsstößel 6 zu sorgen.

Wie aus Fig. 4 ersichtlich, wird der Schaltstößel 3 des Schaltteils 1 vom Übertragungsteil 8 des Betätigungsteils 4 beaufschlagt. Das hier als Kugel ausgeführte Übertragungsteil 8 ist in der Übertragungsteilführungsbahn 7, welche hier im Betätigungsteilgehäuse 13 angeordnet ist, verschiebbar gelagert. Im gezeigten Ausführungsbeispiel hat die Übertragungsteilführungsbahn 7 einen vollständig linearen Verlauf und ist koaxial mit der Schaltstößelführungsbahn 2 angeordnet.

Das Übertragungsteil 8 ist in der in Fig. 4 gezeigten Stellung in der Aufnahmeaufnehmung 12 des Betätigungsstößels 6 gelagert. Die Aufnahmeausnehmung 12 weist eine Wandung auf, deren vorderer Teilbereich den ersten Steuerflächenabschnitt 10 der Steuerfläche 9 bildet, mit dem der Betätigungsstößel 6 das Übertragungsteil 8 in der Übertragungsteilführungsbahn 7 in Richtung Schaltstößel 3 schiebt, um diesen zu beaufschlagen. In Fig. 4 ebenfalls dargestellt ist der zweite Steuerflächenabschnitt 11, in welchem das Übertragungsteil 8 an einer senkrecht zur Übertragungsteilführungsbahn 7 bzw. parallel zur Betätigungsstößelführungsbahn 5 angeordneten linearen Außenfläche des Betätigungsstößels 6 verläuft, welche bei der gezeigten Variante den zweiten Steuerflächenabschnitt 11 bildet, womit dafür gesorgt ist, dass das Übertragungsteil 8 während des zweiten Teilhubes in seiner Position in der Übertragungsteilführungsbahn 7 verharrt und den Schaltstößel 3 nicht weiter bewegt. In diesem Zusammenhang wird darauf hingewiesen, dass ein Verharren in der Position ein Verharren in der Längsrichtung der Übertragungsteilführungsbahn 7 bezeichnet. Natürlich kann sich das Übertragungsteil 8 während des zweiten Teilhubes durch Abrollen am zweiten Steuerflächenabschnitt 11 der äußeren Oberfläche des Betätigungsstößels 6 um die eigene Achse drehen. Das Übertragungsteil 8 wird dabei jedoch nicht in Längsrichtung der Übertragungsteilführungsbahn 7 verschoben.

Zur Rückstellung des Betätigungsstößels 6 ist die Betätigungsstößelrückstellfeder 14 vorgesehen. Diese ist im gezeigten Ausführungsbeispiel in der im Inneren des Betätigungsteilgehäuses 13 kanalartig und umfangsgeschlossen angeordneten Betätigungsstößelführungsbahn 5 angeordnet. Letztere ist in diesem Ausführungsbeispiel linear ausgeführt. Der Betätigungsstößel 6 ist in dieser Betätigungsstößelführungsbahn 5 entsprechend auch linear verschiebbar. Die Betätigungsstößelrückstellfeder 13 beaufschlagt den Betätigungsstößel 6 in Richtung seines vorderen Endes, an dem die Rolle 20 angebracht ist.

Fig. 5 zeigt das Betätigungsteilgehäuse 13, sowie den Montagekorpus 16 in einer teilweise aufgebrochenen Darstellung, so dass wiederum die bereits erläuterten Bauteile zu sehen sind.

Die Fig. 6a bis 6c dienen der Erläuterung eines an sich bekannten Ausführungsbeispiels eines Schaltkontaktes 35, welcher häufig in kommerziell erhältlichen Schaltteilen 1 zum Einsatz kommt. Dargestellt ist lediglich das vom Übertragungsteil 8 abgewandte Ende des Schaltstößels 3 mit der dort angeordneten Rückstellfeder 15 sowie dem nur schematisch dargestellten Schaltkontakt 35. In Fig. 6c befindet sich der Schaltkontakt 35 in der geschlossenen Stellung. Durch Eindrücken des Schaltstößels 3 in das Schaltteilgehäuse 19 schiebt die Feder 15 den Schaltkontakt 35 in den in Fig. 6b dargestellten ersten Schaltpunkt. Dieser wird herkömmlicherweise als Sprungkontakt bezeichnet. Wird der Schaltstößel 3 weiter in das Schaltteilgehäuse 19 hineingedrückt, so wird ein zweiter Schaltpunkt erreicht, welcher in Fig. 6a dargestellt ist. Dieser Schaltpunkt wird üblicherweise als Zwangsöffnung bezeichnet und wird direkt durch den Schaltstößel 3 betätigt. Bei den kommerziell erhältlichen Schaltteilen 1 dieses Typs ist es nun wichtig, dass sichergestellt ist, dass der Schaltstößel 3 gegenüber der in Fig. 6a gezeigten Stellung nicht noch weiter in das Schaltteilgehäuse 19 hineingedrückt wird, da dies zu einer Beschädigung bzw. Zerstörung des Schaltteils 1 führt. Letztere weisen sehr geringe Toleranzen auf. Die Zerstörung der Schaltteile 1 wird durch eine erfindungsgemäße Ausgestaltung des Betätigungsteils 4, wie sie z. B. anhand von Fig. 4 erläutert wurde, zuverlässig vermieden, da das Übertragungsteil 8 ausschließlich vom ersten Steuerflächenabschnitt 10 während des ersten Teilhubs in Richtung des Schaltstößels 3 geschoben wird und im zweiten Teilhub wegen der Form des zweiten Steuerflächenabschnitts 11 in seiner Position in der Übertragungsteilführungsbahn 6 verharrt. An dieser Stelle wird aber explizit darauf hingewiesen, dass erfindungsgemäße Schalter natürlich auch andere Schaltteile 1 mit mehr oder weniger Schaltpunkten aufweisen können.

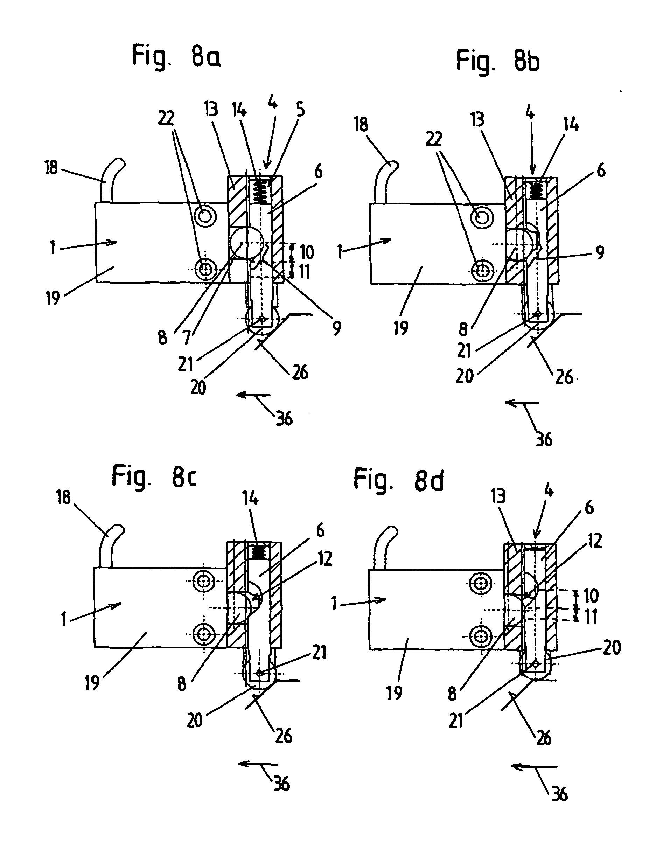

Zur Erläuterung ist in den Fig. 8a bis 8d ein Schaltvorgang in vier Teilschritten dargestellt. Zur Auslösung des Schaltvorgangs wird eine Schrägfläche 26 eines Auslöseteils gegen den Betätigungsstößel 6 bzw. dessen Rolle 20 gefahren. In Fig. 8a trifft die Schrägfläche 26 auf die Rolle 20. Der Betätigungsstößel 6 befindet sich noch in der vollständig ausgefahrenen Stellung. Entsprechend liegt das Übertragungsteil 8 noch vollständig in der Aufnahmeausnehmung 12 und der Schaltstößel 3 ist noch vollständig ausgefahren, was der in Fig. 6c gezeigten Schaltstellung des Schaltkontaktes 35 entspricht.

In Fig. 8b ist die Schrägfläche 26 ein Stück weiter in Richtung 36 gegen den Endschalter verschoben, wodurch der Betätigungsstößel 6 gegen die Betätigungsstößelrückstellfeder 14 einen Teil des ersten Teilhubes in das Betätigungsteilgehäuse 13 hineingedrückt ist. Aufgrund des ersten, schräg zur Längsrichtung der Betätigungsstößelführungsbahn 5 und hier auch schräg zur Übertragungsteilführungsbahn 7 angeordneten Steuerfläche 9 wird das Übertragungsteil 8 durch diese Bewegung des Betätigungsstößels 6 in Richtung hin zum Schaltstößel 3 gedrückt, wodurch dieser in das Schaltteilgehäuse 19 hineingedrückt wird. In der in Fig. 8b gezeigten Stellung erreicht der Schaltkontakt 35 den ersten, häufig auch als Sprungkontakt bezeichneten Schaltpunkt gem. Fig. 6b.

In Fig. 8c ist die Stellung kurz vor Ende des ersten Teilhubs gezeigt, in dieser wird der Zwangsöffner betätigt, der Schaltkontakt befindet sich somit in dem in Fig. 6a gezeigten zweiten Schaltpunkt bzw. kurz davor. In Fig. 8d wurde der erste Teilhub verlassen, der Betätigungsstößel 6 befindet sich im Bereich des zweiten Teilhubes, in dem das Übertragungsteil 8 an der parallel zur Verschieberichtung des Betätigungsstößels 6 in der Betätigungsstößelführungsbahn 5 angeordneten Außenfläche des Betätigungsstößels 6, dem zweiten Steuerflächenabschnitt 11, anliegt und daher nicht mehr weiter in Richtung Schaltteil 1 bzw. Schaltstößel 3 verschoben wird, sondern in seiner Position in der Übertragungsteilführungsbahn 7 verharrt. Während dieses zweiten Teilhubes wird der Schaltstößel 3 somit nicht mehr weiter in das Schaltteilgehäuse 19 hineingedrückt, unabhängig davon, wie weit der Betätigungsstößel 6 noch in das Betätigungsteilgehäuse 13 hineingedrückt wird. Hierdurch werden Toleranzbereiche geschaffen, in denen eine Zerstörung des Schaltteils 1 sicher vermieden ist.

Aus dem vorab Geschilderten ergibt sich somit, dass vorzugsweise vorgesehen ist, dass bei einem ersten Teilhub des Betätigungsstößels 6 entlang der Betätigungsstößelführungsbahn 5 das Übertragungsteil 8 mittels des ersten Steuerflächenabschnitts 10 gegen den Schaltstößel 3 schiebbar ist, womit das Schaltteil 1, vorzugsweise der Schaltkontakt 35, aus einer ersten Schaltstellung in zumindest eine zweite Schaltstellung, und vorzugsweise zusätzlich in eine dritte Schaltstellung, schaltbar ist. Weiters ist vorzugsweise vorgesehen, dass zumindest bei einem zweiten Teilhub des Betätigungsstößels 6 entlang der Betätigungsstößelführungsbahn 5 das Übertragungsteil 8 von dem zweiten Steuerflächenabschnitt 11 so positionierbar ist, dass das Schaltteil 1, vorzugsweise der Schaltkontakt 35, in der mittels des ersten Steuerflächenabschnitts 10 geschalteten Schaltstellung verbleibt. Bezüglich des ersten und zweiten Teilhubs des Betätigungsstößels 6 entlang der Betätigungsstößetführungsbahn 5 kann z.B. vorgesehen sein, dass die Länge des zweiten Teilhubs zumindest 50%, vorzugsweise zumindest 100%, der Länge des ersten Teilhubs beträgt.

Wie in den bisher beschriebenen Figuren des gezeigten Ausführungsbeispiels zu sehen, ist die Steuerfläche 9 im ersten Steuerflächenabschnitt 10, zumindest bereichsweise, in einem 45°-Winkel zur Längsachse der Betätigungsstößelführungsbahn 5 angeordnet. Dies muss aber nicht so sein. Günstig sind jedoch Winkel zwischen 30° und 60°. Im gezeigten Ausführungsbeispiel macht der Schaltstößel 4 einen Maximalhub von 5 mm, während der Betätigungsstößel 6 insgesamt 8,5 mm zurücklegt, womit eine Toleranz von 3, 5 mm geschaffen ist. Dies ist aber natürlich nur ein Beispiel.

Wird die Schrägfläche 26 entgegen der Richtung 36 wieder in die Stellung gem. Fig. 8a oder noch weiter zurückgezogen, so sorgen die Rückstellfeder 15 und die Betätigungsstößelrückstellfeder 14 für die Rückstellung des Schaltstößels 3, des Übertragungsteils 8 und des Betätigungsstößels 6 in die in Fig. 8a gezeigte Stellung.

Fig. 9 zeigt eine beispielhafte Anwendungsmöglichkeit für einen Endschalter gemäß der Erfindung. In diesem Anwendungsbeispiel sind zwei erfindungsgemäße Endschalter an einem Führungsrohr 33 eines Spindelhubgetriebes 27 montiert. Solche Spindelhubgetriebe 27 dienen zum Positionieren von Lasten. In der in Fig. 9 dargestellten Form weist das Spindelhubgetriebe 27 eine in axialer Richtung verstellbare Spindel 31 auf. Zu diesem Zweck besitzt das Spindelhubgetriebe innerhalb des Getriebegehäuses 28 in herkömmlicher Weise eine drehbar aber axial unverschiebbar gelagerte Spindelmutter, die auf dem Außengewinde der Spindel 31 angeordnet ist und durch Drehung einer Antriebswelle 37 in Drehung versetzbar ist. Beispielsweise ist auf der Antriebswelle 37 hierzu innerhalb des Getriebegehäuses 28 eine Schnecke angebracht, die mit einer Schneckenverzahnung der Spindelmutter zusammenwirkt. Solche Spindelhubgetriebe sind bekannt.

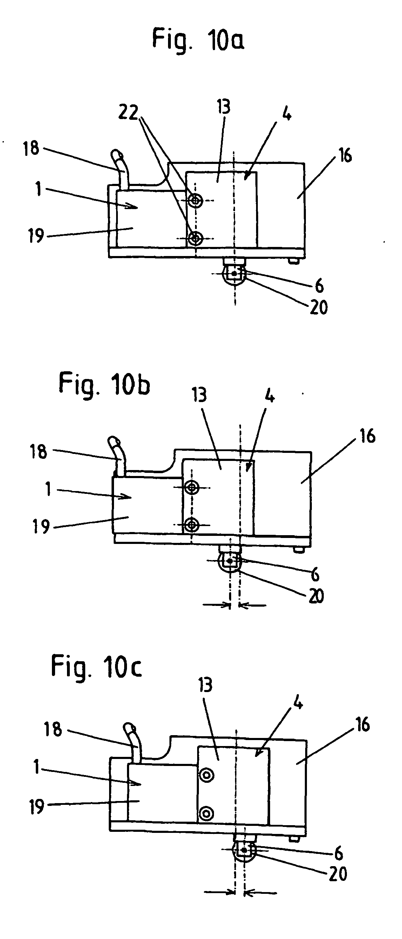

Das eine Ende 29 der Spindel 31 dient zur Verbindung mit der zu positionierenden Last. Am anderen Ende ist ein Auslöseteil 32 angebracht, durch welches die Endschalter betätigt werden. Dieses Auslöseteil 32 trägt bei der gezeigten Ausbildung gleichzeitig die Verdrehsicherung 34 für die Spindel 31, durch die eine verschiebbare aber unverdrehbare Führung im Führungsrohr 33 erreicht wird. Die Endschalter sind jeweils mit ihrem Montagekorpus 16 am Führungsrohr 33 angeschraubt, wobei im Führungsrohr 33 Öffnungen zum Durchtritt der Betätigungsstößel 6 ausgebildet sind. Der Schaltvorgang, wie er bereits erläutert wurde, wird im gezeigten Ausführungsbeispiel des Spindelhubgetriebes 27 gem. Fig. 9 ausgelöst, wenn das Auslöseteil 32 mit einem seiner Schrägflächen 26 bzw. 26' auf eine der Rollen 20 der Betätigungsstößel 6 der Endschalter trifft. In der Regel wird das so generierte Schaltsignal des jeweiligen Endschalters dazu verwendet, den auf die Antriebswelle 37 wirkenden Antrieb abzuschalten oder dessen Drehrichtung umzudrehen. Dies ist aber natürlich nur ein Beispiel. Um den Schaltpunkt möglichst gut justieren zu können, sind die bereits erwähnten Justierführungsbahnen 17 am Montagekorpus 16 vorgesehen. Sie erlauben es, wie in den Fig. 10a bis 10c noch einmal gezeigt, diese Position des Betätigungsstößels 6 entlang des Montagekorpus 16 zu verschieben und damit zu justieren. Im gezeigten Ausführungsbeispiel gem. Fig. 9 resultiert dies in einer Verstellung der Position des Betätigungsstößels 6 in Längsrichtung des Führungsrohres 32.

Mit erfindungsgemäßen Endschaltern ist es möglich, die bei kommerziell erhältlichen Schaltteilen sehr begrenzten Toleranzen von ca. 1 mm auf Toleranzen des gesamten Endschalters von 4 bis 5 mm und noch darüber auszudehnen, was den Einbau und die Justierung des Endschalters deutlich erleichtert und eine Zerstörung des Schaltteils sicher verhindert. Hierdurch ist ein sehr robuster Endschalter geschaffen, der bei Verschleiß der zu überwachenden Bauteile einfach nachgestellt werden kann. Der Endschalter selbst ist sehr verschleißarm und weist eine hohe Funktionssicherheit auf. Baugleiche Endschalter können zur Überwachung von Bewegungen verschiedener Bauteile in verschiedene Richtungen verwendet werden. Die Funktion des Endschalters ist in alle Richtungen gegeben. Der Betätigungsstößel des Endschalters kann sogar vollständig überfahren werden, ohne dass es hierdurch zu einer Beschädigung des Endschalters und insbesondere des Schaltteils kommt. All dies wird durch eine relativ einfache aber zuverlässig arbeitende Konstruktion erreicht. Auch Beeinträchtigungen durch verkrustetes Fett sind nicht zu befürchten.

### Legende

### zu den Hinweisziffern:

- 1: Schaltteil
- 2: Schaltstößelführungsbahn
- 3: Schaltstößel
- 4: Betätigungsteil
- 5: Betätigungsstößelführungsbahn
- 6: Betätigungsstößel
- 7: Übertragungsteilführungsbahn
- 8: Übertragungsteil
- 9: Steuerfläche
- 10: erster Steuerflächenabschnitt
- 11: zweiter Steuerflächenabschnitt
- 12: Aufnahmeausnehmung
- 13: Betätigungsteilgehäuse
- 14: Betätigungsstößelrückstellfeder
- 15: Rückstellfeder
- 16: Montagekorpus
- 17: Justierführungsbahn
- 18: Signalkabel
- 19: Schaltteilgehäuse
- 20: Rolle
- 21: Rollenachse
- 22, 22': Schrauben
- 23: Halteplatte
- 24: geschlitzte Hülse
- 25: Durchtrittsöffnung
- 26, 26': Schrägfläche
- 27: Spindelhubgetriebe
- 28: Getriebegehäuse
- 29: erstes Ende
- 30: zweites Ende
- 31: Spindel
- 32: Auslöseteil
- 33: Führungsrohr
- 34: Verdrehsicherung
- 35: Schaltkontakt
- 36: Richtung
- 37: Antriebswelle

## Patentansprüche

1. Schalter, insbesondere Endschalter, mit zumindest einem Schaltteil (1), welches zumindest einen entlang einer Schaltstößetführungsbahn (2), insbesondere linear, verschiebbaren Schaltstößel (3) zum Schalten mindestens eines Schaltkontakts aufweist, und mit zumindest einem Betätigungsteil (4) zum Verschieben des Schaltstößels (3) entlang der Schaltstößelführungsbahn (2), wobei das Betätigungsteil (4) zumindest ein, vorzugsweise linear, verschiebbar an oder in einer Übertragungsteilführungsbahn (7) gelagertes Übertragungsteil (8) zum Verschieben des Schaltstößels (3) aufweist, **dadurch gekennzeichnet, dass** das Betätigungsteil (4) zumindest einen, vorzugsweise linear, verschiebbar an oder in einer Betätigungsstößelführungsbahn (5) gelagerten Betätigungsstößel (6) aufweist, wobei die Betätigungsstößelführungsbahn (5) und die Übertragungsteitführungsbahn (7) schräg oder orthogonal zueinander angeordnet sind und das Übertragungsteil (8) in oder an der Übertragungsteilführungsbahn (7) mittels zumindest einer, zumindest abschnittsweise schräg zur Betätigungsstößelführungsbahn (5) angeordneten Steuerfläche (9) vom Betätigungsstößel (6) in Richtung hin zum Schaltstößel (3) verschiebbar ist.

2. Schalter nach Anspruch 1, **dadurch gekennzeichnet, dass** die Steuerfläche (9) einen ersten Steuerflächenabschnitt (10) und zumindest einen zweiten Steuerflächenabschnitt (11) aufweist, wobei der erste Steuerflächenabschnitt (10) zum Verschieben des Übertragungsteiles (8) in Richtung hin zum Schaltstößel (3) schräg zur Betätigungsstößelführungsbahn (5) angeordnet ist und der zweite Steuerflächenabschnitt (11) im Wesentlichen parallel zur Betätigungsstößelführungsbahn (5) angeordnet ist, wobei vorzugsweise der erste Steuerflächenabschnitt (10) und der zweite Steuerflächenabschnitt (11) aneinandergrenzend angeordnet sind.

3. Schalter nach Anspruch 1 oder 2, **dadurch gekennzeichnet, dass** die Steuerfläche (9) zumindest abschnittweise, vorzugsweise im ersten Steuerflächenabschnitt (10), schräg zur Übertragungsteilführungsbahn (7) angeordnet ist.

4. Schalter nach einem der Ansprüche 1 bis 3, **dadurch gekennzeichnet, dass** die Betätigungsstößelführungsbahn (5) und die Übertragungsteilführungsbahn (7) in einem Winkel von 45° bis 90° aufeinandertreffend angeordnet sind.

5. Schalter nach einem der Ansprüche 1 bis 4, **dadurch gekennzeichnet, dass** die Schatistößelführungsbahn (2) und die Übertragungsteilführungsbahn (7) parallel, vorzugsweise koaxial, angeordnet sind.

6. Schalter nach einem der Ansprüche 1 bis 5, **dadurch gekennzeichnet, dass** die Steuerfläche (9) am Betätigungsstößel (6), vorzugsweise einstückig, fixiert ist.

7. Schalter nach einem der Ansprüche 1 bis 6, **dadurch gekennzeichnet, dass** der Betätigungsstößel (6) eine Aufnahmeausnehmung (12) für das Übertragungsteil (8) aufweist und die Steuerfläche (9) zumindest abschnittsweise, vorzugsweise der erste Steuerflächenabschnitt (10), einen Teil einer die Aufnahmeausnehmung (12) begrenzenden Wand des Betätigungsstößels (6) bildet, wobei vorzugsweise das Übertragungsteil (8) zumindest teilweise in die Aufnahmeausnehmung (12) versenkbar ist

8. Schalter nach einem der Ansprüche 1 bis 7, **dadurch gekennzeichnet, dass** das Übertragungsteil (8) zumindest bereichsweise ein gerundete Außenkontur aufweist.

9. Schalter nach einem der Ansprüche 1 bis 8, **dadurch gekennzeichnet, dass** das Übertragungsteil (8) eine Kugel oder Walze aufweist oder ist.

10. Schalter nach einem der Ansprüche 1 bis 9, **dadurch gekennzeichnet, dass** die Betätigungsstößelführungsbahn (5) und die Übertragungsteilführungsbahn (7) zumindest teilweise in oder an einem gemeinsamen Betätigungsteilgehäuse (13) angeordnet sind.

11. Schalter nach einem der Ansprüche 1 bis 10, **dadurch gekennzeichnet**, er zumindest eine, vorzugsweise in oder an der Betätigungsstößelführungsbahn (5) angeordnete, auf den Betätigungsstößel (6) wirkende Betätigungsstößelrückstellfeder (14) aufweist, wobei vorzugsweise der Betätigungsstößel (6) eine maximal aus der Betätigungsstößelführungsbahn (5) ausgefahrene Stellung aufweist und die Betätigungsstößelrückstellfeder (14) den Betätigungsstößel (6) in Richtung hin zur maximal aus der Betätigungsstößelführungsbahn (5) ausgefahrenen Stellung beaufschlagt.

12. Schalter nach einem der Ansprüche 1 bis 11, **dadurch gekennzeichnet, dass** er zumindest eine, vorzugsweise in oder an dem Schaltteil (1) angeordnete, auf das Übertragungsteil (8) und/oder den Schaltstößel (3) wirkende Rückstellfeder (15) aufweist, wobei vorzugsweise die Rückstellfeder (15) das Übertragungsteil (8) in Richtung hin zum Betätigungsstößel (6) beaufschlagt.

13. Schalter nach einem der Ansprüche 1 bis 12, **dadurch gekennzeichnet, dass** er einen Montagekorpus (16) aufweist, an dem das Betätigungsteil (4) und vorzugsweise auch das Schaltteil (1) gehalten ist.

14. Schalter nach Anspruch 13, **dadurch gekennzeichnet, dass** das Betätigungsteil (4) und vorzugsweise auch das Schaltteil (1), vorzugsweise entlang von zumindest einer Justierführungsbahn (17) und/oder relativ zueinander, verschiebbar am Montagekorpus (16) gehalten ist.

15. Spindelhubgetriebe (27) mit zumindest einem Schalter nach einem der Ansprüche 1 bis 14.

## Claims

1. A switch, in particular a limit switch, having at least one switching part (1) which includes at least one switching element (3), for switching at least one switching contact, this switching element (3) being displaceable, in particular linearly, along a switching element guide path (2), and having at least one actuating part (4) for displacing the switching element (3) along the switching element guide path (2), in which the actuating part (4) includes at least one transfer part (8), for displacing the switching element (3), this transfer part (8) being mounted such that it is displaceable, preferably linearly, on or in a transfer part guide path (7), **characterised in that** the actuating part (4) includes at least one actuating element (6) which is mounted such that it is displaceable, preferably linearly, on or in an actuating element guide path (5), in which the actuating element guide path (5) and the transfer part guide path (7) are arranged obliquely or at a right angle to one another, and the transfer part (8) is displaceable by the actuating element (6) in the direction of the switching element (3), in or on the transfer part guide path (7), by means of at least one control surface (9) which is arranged at least in respect of certain portions obliquely in relation to the actuating element guide path (5).

2. A switch according to Claim 1, **characterised in that** the control surface (9) includes a first control surface portion (10) and at least a second control surface portion (11), in which the first control surface portion (10) is arranged obliquely in relation to the actuating element guide path (5), for displacing the transfer part (8) in the direction of the switching element (3), and the second control surface portion (11) is arranged substantially parallel to the actuating element guide path (5), in which the first control surface portion (10) and the second control surface portion (11) are preferably arranged bordering on one another.

3. A switch according to Claim 1 or 2, **characterised in that** the control surface (9) is arranged at least in respect of certain portions, preferably in the first control surface portion (10), obliquely in relation to the transfer part guide path (7).

4. A switch according to one of Claims 1 to 3, **characterised in that** the actuating element guide path (5) and the transfer part guide path (7) are arranged to meet at an angle from 45° to 90°.

5. A switch according to one of Claims 1 to 4, **characterised in that** the switching element guide path (2) and the transfer part guide path (7) are arranged to be parallel, preferably coaxial.

6. A switch according to one of Claims 1 to 5, **characterised in that** the control surface (9) is fixed to the actuating element (6), preferably in one piece therewith.

7. A switch according to one of Claims 1 to 6, **characterised in that** the actuating element (6) includes a receiving cutout (12) for the transfer part (8), and the control surface (9), at least in respect of certain portions, preferably the first control surface portion (10), forms part of a wall of the actuating element (6) delimiting the receiving cutout (12), in which the transfer part (8) is preferably at least partly retractable into the receiving cutout (12).

8. A switch according to one of Claims 1 to 7, **characterised in that** the transfer part (8) includes a rounded external contour, at least in certain regions.

9. A switch according to one of Claims 1 to 8, **characterised in that** the transfer part (8) includes or is a ball or a roller.

10. A switch according to one of Claims 1 to 9, **characterised in that** the actuating element guide path (5) and the transfer part guide path (7) are arranged at least partly in or on a common actuating part housing (13).

11. A switch according to one of Claims 1 to 10, **characterised in that** it includes at least one actuating element restoring spring (14) which is preferably arranged in or on the actuating element guide path (5) and acts on the actuating element (6), in which the actuating element (6) preferably has a position in which it is extended out of the actuating element guide path (5) to the maximum extent, and the actuating element restoring spring (14) acts on the actuating element (6) in the direction of the position in which it is extended out of the actuating element guide path (5) to the maximum extent.

12. A switch according to one of Claims 1 to 11, **characterised in that** it includes at least one restoring spring (15) which is preferably arranged in or on the switching part (1) and acts on the transfer part (8) and/or the switching element (3), in which the restoring spring (15) preferably acts on the transfer part (8) in the direction of the actuating element (6).

13. A switch according to one of Claims 1 to 12, **characterised in that** it includes an assembly casing (16) on which the actuating part (4) and preferably also the switching part (1) is or are held.

14. A switch according to Claim 13, **characterised in that** the actuating part (4) and preferably also the switching part (1) is or are held such that it is or they are displaceable on the assembly casing (16), preferably along at least one adjustment guide path (17) and/or in relation to one another.

15. A screw lifting mechanism (27) having at least one switch according to one of Claims 1 to 14.

## Revendications

1. Interrupteur, notamment interrupteur de fin de course comportant au moins une partie d'interrupteur (1) ayant au moins un poussoir de commutation (3) coulissant le long d'un chemin de guidage de poussoir de commutation (2), en particulier linéaire, pour commuter au moins un contact, et au moins une pièce d'actionnement (4) pour coulisser le poussoir de commutation (3) le long du chemin de guidage de poussoir de commutation (2),
la pièce actionnement (4) ayant au moins une pièce de transmission (8) installée de façon à coulisser, de préférence de manière linéaire, dans ou sur un chemin de guidage de pièce de transmission (7) pour coulisser le poussoir de commutation (3),
interrupteur **caractérisé en ce que**
la pièce d'actionnement (4) comporte au moins un poussoir d'actionnement (6) monté coulissant, de préférence de manière linéaire sur ou dans un chemin de guidage de poussoir d'actionnement (5),
- le chemin de guidage de poussoir d'actionnement (5) et le chemin de guidage de la pièce de transmission (7), étant inclinés ou orthogonaux l'un par rapport à l'autre, et
- la pièce de transmission (8) étant coulissante dans un ou sur un chemin de guidage de pièce de transmission (7), à l'aide d'au moins une surface de commande (9) inclinée au moins par segment par rapport au chemin de guidage du poussoir d'actionnement (5), par le poussoir d'actionnement (6) en direction du poussoir de commutation (3).

2. Interrupteur selon la revendication 1,
**caractérisé en ce que**
la surface de commande (9) comporte un premier segment de surface de commande (10) et au moins un second segment de surface de commande (11),
- le premier segment de surface de commande (10) étant installé pour coulisser la pièce de transmission (8) en direction du poussoir de commutation (3), en biais par rapport au chemin de guidage de poussoir d'actionnement (5), et
- le second segment de surface de commande (11) est pratiquement parallèle au chemin de guidage de poussoir d'actionnement (5), et
- de préférence, le premier segment de surface de commande (10) et le second segment de surface de commande (11) sont adjacents.

3. Interrupteur selon la revendication 1 ou 2,
**caractérisé en ce que**
la surface de commande (9) est inclinée au moins par segment, de préférence au niveau du premier segment de surface de commande (10), par rapport au chemin de guidage (7) de la pièce de transmission.

4. Interrupteur selon l'une des revendications 1 à 3,
**caractérisé en ce que**
le chemin de guidage du poussoir d'actionnement (5), et le chemin de guidage de la pièce de transmission (7), se rejoignent suivant un angle compris entre 45° et 90°.

5. Interrupteur selon l'une des revendications 1 à 4,
**caractérisé en ce que**
le chemin de guidage du poussoir de commutation (2) et le chemin de guidage de la pièce de transmission (7), sont parallèles et de préférence coaxiaux.

6. Interrupteur selon l'une des revendications 1 à 5,
**caractérisé en ce que**
la surface de commande (9) est fixée au poussoir d'actionnement (6) et de préférence elle est en une seule pièce avec celui-ci.

7. Interrupteur selon l'une des revendications 1 à 6,
**caractérisé en ce que**
le poussoir d'actionnement (6) comporte une cavité de réception (12) pour la pièce de transmission (8) et la surface de commande (9) constitue au moins par segment de préférence le premier segment de surface de commande (10), en faisant partie d'une paroi du poussoir d'actionnement (6) délimitant la cavité de réception (12), et
de préférence, la pièce de transmission (8) s'enfonce au moins en partie dans la cavité de réception (12).

8. Interrupteur selon l'une des revendications 1 à 7,
**caractérisé en ce que**
la pièce de transmission (8) a au moins, par zone, un contour extérieur arrondi.

9. Interrupteur selon l'une des revendications 1 à 8,
**caractérisé en ce que**
la pièce de transmission (8) comporte une bille ou un rouleau ou est une bille ou un rouleau.

10. Interrupteur selon l'une des revendications 1 à 9,
**caractérisé en ce que**
le chemin de guidage du poussoir d'actionnement (5) et le chemin de guidage de la pièce de transmission (7), sont au moins en partie logés dans ou sur le boîtier (13) de la pièce d'actionnement, commun.

11. Interrupteur selon l'une des revendications 1 à 10,
**caractérisé en ce qu'**
il comporte au moins un ressort de rappel de pièce d'actionnement (14) logé de préférence dans ou sur le chemin de guidage de poussoir d'actionnement (5) et agissant sur le poussoir d'actionnement (6),
de préférence, le poussoir d'actionnement (6) a une position sortie maximale hors du chemin de guidage de poussoir de l'actionnement (5), et le ressort de rappel de poussoir d'actionnement (14), sollicite le poussoir d'actionnement (6) en direction de la position maximale de sortie sur le chemin de guidage de poussoir d'actionnement (5).

12. Interrupteur selon l'une des revendications 1 à 11,
**caractérisé en ce qu'**
il comporte au moins un ressort de rappel (15) logé de préférence dans ou sur la pièce de commutation (1), agissant sur la pièce de transmission (8) et/ou sur le poussoir de commutation (3),
de préférence, le ressort de rappel (15) sollicite la pièce de transmission (8) en direction du poussoir d'actionnement (6).

13. Interrupteur selon l'une des revendications 1 à 12,
**caractérisé en ce qu'**
il comporte un corps de montage (16) qui reçoit la pièce d'actionnement (4) et de préférence également la pièce de commutation (1).

14. Interrupteur selon l'une des revendications 1 à 13,
**caractérisé en ce que**
la pièce d'actionnement (4) et de préférence également la pièce de commutation (1), sont tenues de préférence le long d'au moins un chemin de guidage et d'ajustage (17) et/ou de manière coulissante l'une par rapport à l'autre sur le corps de montage (16).

15. Transmission à broche (27) comportant au moins un interrupteur selon l'une des revendications 1 à 14.
